# EUROPÄISCHE PATENTSCHRIFT

(11) **EP 2 906 435 B1**
(45) Veröffentlichungstag und Bekanntmachung des Hinweises auf die Patenterteilung: **10.10.2018**
(21) Anmeldenummer: 13748320.2
(22) Anmeldetag: 14.08.2013
(51) Int. Cl.: B60C 11/13, B60C 11/03

(54) **FAHRZEUGLUFTREIFEN**
VEHICLE PNEUMATIC TIRES
PNEUMATIQUES D'AVION

(30) Priorität: 11.10.2012 DE 102012109712
(43) Veröffentlichungstag der Anmeldung: 19.08.2015
(73) Patentinhaber: Continental Reifen Deutschland GmbH, 30165 Hannover (DE)
(72) Erfinder: BEHR, Ulrich, 30167 Hannover (DE)
(74) Vertreter: Finger, Karsten
(86) Internationale Anmeldenummer: PCT/EP2013/066969
(87) Internationale Veröffentlichungsnummer: WO 2014/056651

(56) Entgegenhaltungen:
- EP-A1- 2 127 910
- JP-A- S60 116 511
- US-A- 6 123 130
- US-B1- 6 923 232

## Beschreibung

Die Erfindung betrifft einen Fahrzeugluftreifen mit einem Laufstreifen, welcher, bei am Fahrzeug montiertem Reifen betrachtet, ein bei der Außenschulter angeordnetes Profilband aufweist, das durch eine in Umfangsrichtung umlaufende Umfangsnut von weiteren Profilelementen getrennt ist, wobei im schulterseitigen Profilband eine Vielzahl von zueinander zumindest im Wesentlichen parallel verlaufenden Querrillen aus mehreren gewinkelt zueinander verlaufenden Rillenabschnitten vorgesehen ist.

Ein derartiger Fahrzeugluftreifen ist beispielsweise aus der US 5,388,625 A bekannt. Das Laufstreifenprofil dieses Reifens weist fünf in Umfangsrichtung umlaufende Profilbänder auf, die voneinander durch breite Umfangsnuten getrennt sind. Die drei im mittleren Bereich des Laufstreifens verlaufenden Profilbänder sind in Profilblöcke gegliedert, die durch Querrillen voneinander getrennt sind, welche sich jeweils aus drei Abschnitten - zwei in axialer Richtung verlaufenden Abschnitten und einem diese verbindenden, in Umlaufrichtung verlaufenden Abschnitt - zusammensetzen. Die schulterseitig verlaufenden Profilbänder sind blockartig gegliedert und jeweils mit einer Vielzahl von schmalen, sich etwa zickzackförmig aus mehreren Rillenabschnitten zusammensetzenden Querrillen versehen. Dieser bekannte Reifen soll für den Ganzjahreseinsatz geeignet sein und durch seine Profilgestaltung einen gleichmäßigen Abrieb aufweisen.

Aus der US 6 123 130 A ist ein Fahrzeugluftreifen mit einem Laufstreifen bekannt, welcher schulterseitig jeweils ein blockartig strukturiertes Profilband aufweist, das durch eine Umfangsnut von den im mittleren Laufstreifenbereich verlaufenden Profilelementen getrennt ist. Im Profilband verlaufen Querrillen, die innerhalb des Profilbandes enden, wobei in Umfangsrichtung jeweils eine Querrille, die Richtung Laufstreifenrand verläuft und eine Querrille, die zur Umfangsnut verläuft, abwechselnd vorgesehen sind. Die Endabschnitte der Querrillen überlappen im mittleren Bereich des Profilbandes und werden hier von einem in Umfangsrichtung gerade verlaufenden schmalen und seichten Einschnitt geschnitten.

Ein weiterer Fahrzeugluftreifen mit schulterseitig verlaufenden Querrillen, welche sich jeweils aus mehreren gewinkelt zueinander verlaufenden Rillenabschnitten zusammensetzen, ist aus der JP S60 116511 A bekannt. Der aus der US 6 923 232 B1 bekannte Fahrzeugluftreifen weist einen Laufstreifen auf, in dessen schulterseitigen Laufstreifenbereichen in Draufsicht wellenförmig verlaufende, drei Abschnitten aufweisende Querrillen. Der aus der EP 2 127 910 A1 bekannte Laufstreifen weist ein schulterseitig verlaufendes Profilband mit in Draufsicht V-förmigen Rillen auf.

Es ist bekannt, dass die unter dem Begriff "Trockenhandling" zusammengefassten Eigenschaften von Reifen, wie das Ansprechverhalten auf Lenkkräfte, das Bremsverhalten und dergleichen auf trockenem Untergrund, vor allem bei Sportreifen, insbesondere bei Kurvenfahrt mit hohen Geschwindigkeiten, stark durch die Geometrie bzw. die Laufstreifenstruktur an der Außenschulter des Reifens beeinflusst werden. Die Außenschulter ist bekannterweise jene, die bei montiertem Reifen an der Außenseite des Fahrzeuges sichtbar ist. Ein kleiner Negativanteil, insbesondere bedingt durch schmale Rillen, Einschnitte und dergleichen, und damit ein großer Positivanteil in den Profilelementen im Außenschulterbereich hat eine steife und stabile Außenschulter zur Folge, die hohe Kräfte übertragen kann, was im Allgemeinen zu guten Handlingeigenschaften führt. Nachteilig ist jedoch, dass der geringe Negativanteil das Aquaplaningverhalten, insbesondere das Quer-Aquaplaningverhalten des Laufstreifens, beeinträchtigt.

Der Erfindung liegt die Aufgabe zugrunde, bei einem Fahrzeugluftreifen der eingangs genannten Art diesen Zielkonflikt zwischen gutem Trockenhandling und gutem Wasserableitvermögen zu lösen.

Gelöst wird die gestellte Aufgabe erfindungsgemäß dadurch, dass sich die Querrillen im Außenschulterbereich aus drei Rillenabschnitten zusammensetzen, wobei die beiden äußeren Rillenabschnitte zumindest im Wesentlichen in axialer Richtung verlaufen und der diese verbindende mittlere Rillenabschnitt jeweils unter einem stumpfen Winkel, welcher maximal 135 ° beträgt, zu den beiden äußeren Rillenabschnitten verläuft, wobei die beiden äußeren Rillenabschnitte jeweils eine zumindest im Wesentlichen in *radialer* Richtung verlaufende Rillenflanke und eine sich aus einem zumindest im Wesentlichen in *radialer* Richtung verlaufenden Flankenabschnitt und einer Fase zusammensetzende Rillenflanke aufweisen, wobei der verbindende Rillenabschnitt von zwei Fasen gebildet ist, wobei die Fasen in den äußeren Rillenabschnitten bis in eine in *radialer* Richtung ermittelte Tiefe reichen, die ein bestimmter für diese Fasen gleicher prozentualer Wert der jeweiligen oder der größten Tiefe dieser Rillenabschnitte ist, und wobei die Fasen, welche den mittleren Rillenabschnitt bilden, bis in eine Tiefe reichen, welche der Tiefe der Fasen der äußeren Rillenabschnitte an deren Eckbereichen zum mittleren Rillenabschnitt zumindest im Wesentlichen entspricht.

Diese erfindungsgemäße Ausgestaltung der sich aus drei Rillenabschnitten zusammengesetzten Querrillen mit bzw. aus Fasen hat vor allem bei neuem Reifen ein größeres Negativvolumen des Profilbandes und damit ein gutes Aquaplaningverhalten im Bereich der Außenschulter zur Folge, gewährleistet aber gleichzeitig auch eine hohe Quersteifigkeit in der Außenschulter. Die Fasen versteifen außerdem die Rillenkanten an der Profiloberfläche und verhindern das Auftreten von Einrolleffekten.

Besonders ausgewogen ist das Verhältnis zwischen dem für ein gutes Aquaplaningverhalten zur Verfügung stehendem Negativvolumen und einer guten Quersteifigkeit dann, wenn der oben erwähnte prozentuale Wert zwischen 45 % und 80 %, insbesondere etwas 60 %, beträgt.

Für ein möglichst verwirbelungsfreies Durchströmen von Wasser durch die Querrillen ist es vorteilhaft, wenn die Fase des einen äußeren Rillenabschnittes mit der einen Fase des mittleren Rillenabschnittes und die Fase des anderen äußeren Rillenabschnittes mit der anderen Fase des mittleren Rillenabschnittes jeweils eine gemeinsame Kante bildet.

Für eine optimale Ableitung des Wassers aus den äußeren Rillenabschnitten ist es ferner vorteilhaft, wenn die Fasen in den äußeren Rillenabschnitten an den Eckbereichen zum mittleren Rillenabschnitt ihren größten Winkel mit der radialen Richtung einschließen, wobei der Winkel über die Erstreckung der Rillenabschnitte kontinuierlich kleiner wird. Diese Maßnahmen tragen auch zu einer hohen Quersteifigkeit bei.

In diesem Zusammenhang sind bestimmte Winkelbereiche bzw. Winkelgrößen der Fasen in den äußeren Rillenabschnitten besonders vorteilhaft. Bei einer bevorzugten Ausführungsform der Erfindung sollten die Winkel der Fasen in den äußeren Rillenabschnitten beim mittleren Rillenabschnitt zwischen 20 ° und 65 ° und an den freien Enden dieser Rillenabschnitte zwischen 0 ° und 20 ° betragen.

Der mittlere Rillenabschnitt, welcher seichter ausgeführt ist als die beiden äußeren Rillenabschnitte, trägt durch seine besondere Ausgestaltung aus zwei Schrägflächen bzw.

Fasen vor allem zur Erhöhung der Quersteifigkeit des Profilbandes bei. Besonders vorteilhaft ist dabei eine Ausführung des mittleren Rillenabschnittes, bei dem die eine Fase am Inneneck zum laufstreifenaußenseitig anschließenden Rillenabschnitt ihren größten Winkel mit der radialen Richtung einschließt und die andere Fase am Inneneck zum laufstreifeninnenseitig anschließenden Rillenabschnitt ihren größten Winkel mit der radialen Richtung einschließt.

Weitere Merkmale, Vorteile und Einzelheiten der Erfindung werden nun anhand der Zeichnung, die ein Ausführungsbeispiel der Erfindung darstellt, näher beschrieben. Dabei zeigen
Fig. 1 eine Draufsicht auf einen Umfangsabschnitt eines schulterseitig verlaufenden Profilbandes eines Laufstreifens eines Fahrzeugluftreifens,
Fig. 2 eine Schnittdarstellung gemäß der Schnittansicht der Linie II-II der Fig. 1,
Fig. 3 eine Schnittdarstellung gemäß der Schnittansicht der Linie III-III der Fig. 1,
Fig. 4 eine Schnittdarstellung gemäß der Schnittansicht der Linie IV-IV der Fig. 1,
Fig. 5 eine Schnittdarstellung gemäß der Schnittansicht der Linie V-V der Fig. 1,
Fig. 6 eine Schnittdarstellung gemäß der Schnittansicht der Linie VI-VI der Fig. 1 und
Fig. 7 eine Schnittdarstellung gemäß der Schnittansicht der Linie VII-VII der Fig. 1.

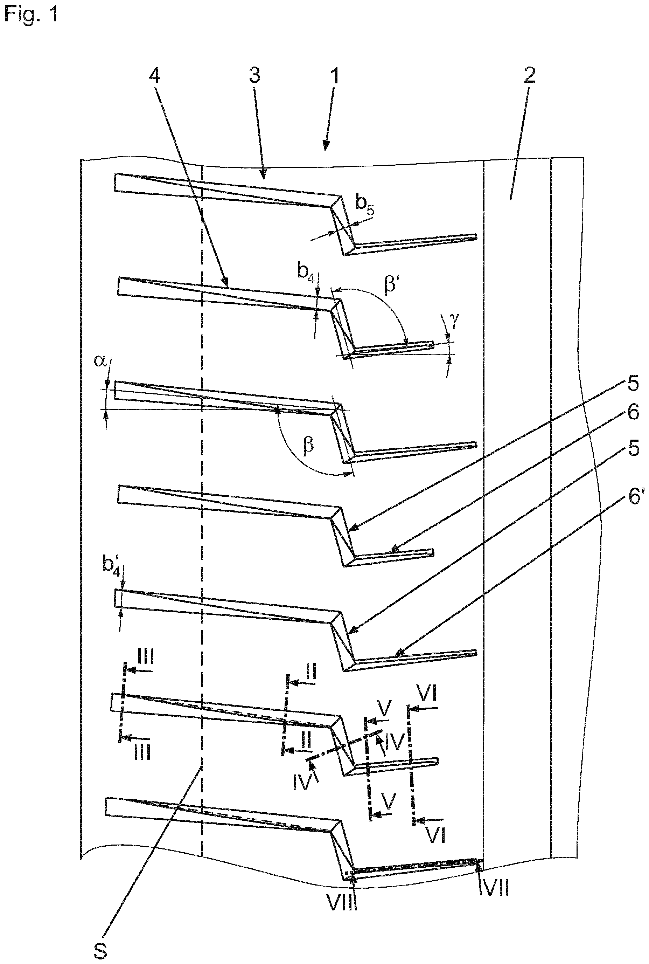

Fig. 1 zeigt eine Draufsicht auf einen Umfangsabschnitt eines Profilbandes 1 eines Laufstreifens eines Fahrzeugluftreifens, insbesondere eines Reifens für einen Personenkraftwagen. Laufstreifen von Fahrzeugluftreifen setzen sich üblicherweise aus einer Anzahl von durch Umfangsrillen mit voneinander getrennten Profilpositiven zusammen, welche als Profilbänder, als Profilblockreihen oder dergleichen ausgeführt sind.

Das in Fig. 1 gezeigte Profilband 1 ist ein im Laufstreifen schulterseitig verlaufendes Profilband, welches durch eine in Umfangsrichtung des Laufstreifens umlaufende in Fig. 1 angedeutete Umfangsrille 2 von einem weiteren, nicht näher dargestellten, strukturierten Laufstreifenbereich getrennt ist. Die gestrichelte Linie S versinnbildlicht im Wesentlichen die im Profilband 1 befindliche äußere Grenze des sich im Betrieb des Reifens ergebenden bodenberührenden Bereiches des Laufstreifens.

Das schulterseitige Profilband 1 ist über seinen Umfang mit einer Vielzahl von zumindest im Wesentlichen parallel zueinander verlaufenden Querrillen 3 versehen. Jede Querrille 3 setzt sich aus drei Rillenabschnitten 4, 5, 6 bzw. 6'zusammen, welche sich zumindest im Wesentlichen gerade erstrecken. Der Rillenabschnitt 4 ist der im Laufstreifen am weitesten außen befindliche Rillenabschnitt, er verläuft über den bodenberührenden Bereich des Laufstreifens, demnach über die Linie S hinaus und erstreckt sich höchstens unter einem kleinen spitzen Winkel α - ermittelt zwischen der axialen Richtung und der Längsachse des Rillenabschnittes 4 - in der Größenordnung von bis zu 20 ° zur axialen Richtung. An der Profiloberfläche weist der Rillenabschnitt 4 an seinem laufstreifeninnenseitigen Ende eine Breite b₄ auf, welche 2 bis 4 mm beträgt, zum laufstreifenaußenseitigen Ende nimmt die Breite des Rillenabschnittes 4 zu, sodass am laufstreifenaußenseitigen Ende die Breite b₄' um etwa 1 bis 3 mm größer ist als die Breite b₄. Der an den Rillenabschnitt 4 unmittelbar anschließende Rillenabschnitt 5 erstreckt sich unter einem Winkel β, welcher ein stumpfer Winkel von 95 bis 135 ° ist und beim Inneneck I₁ gemessen wird, zum Rillenabschnitt 4. Der Rillenabschnitt 5 weist eine zumindest im Wesentlichen konstante Breite b₅ auf, welche im Wesentlichen der Breite b₄ entspricht oder um bis zu 2 mm größer ist als b₄. Der Rillenabschnitt 6 bzw. 6' schließt unmittelbar an den Rillenabschnitt 5 an und erstreckt sich zur axialen Richtung unter einem Winkel von bis zu 20 °, welcher beim zweiten Inneneck I₂ gemessen wird. Der Rillenabschnitt 6 ist kürzer als der Rillenabschnitt 6', wobei in Umfangsrichtung jeweils eine Querrille 3 mit einem längeren Rillenabschnitt 6' mit einer Querrille 3 mit einem kürzeren Rillenabschnitt 6 abwechselt. Der längere Rillenabschnitt 6' endet in einem Abstand von mindestens 1 mm von der Umfangsrille 2. Bis auf die unterschiedliche Länge sind die Rillenabschnitt 6, 6' auf analoge Weise, wie noch beschrieben wird, ausgeführt. Der zwischen dem Rillenabschnitt 5 und dem Rillenabschnitt 6 bzw. 6' gebildete Winkel β' beträgt mindestens 90 ° und insbesondere bis zu 135 ° und ist vorzugsweise kleiner als der Winkel β.

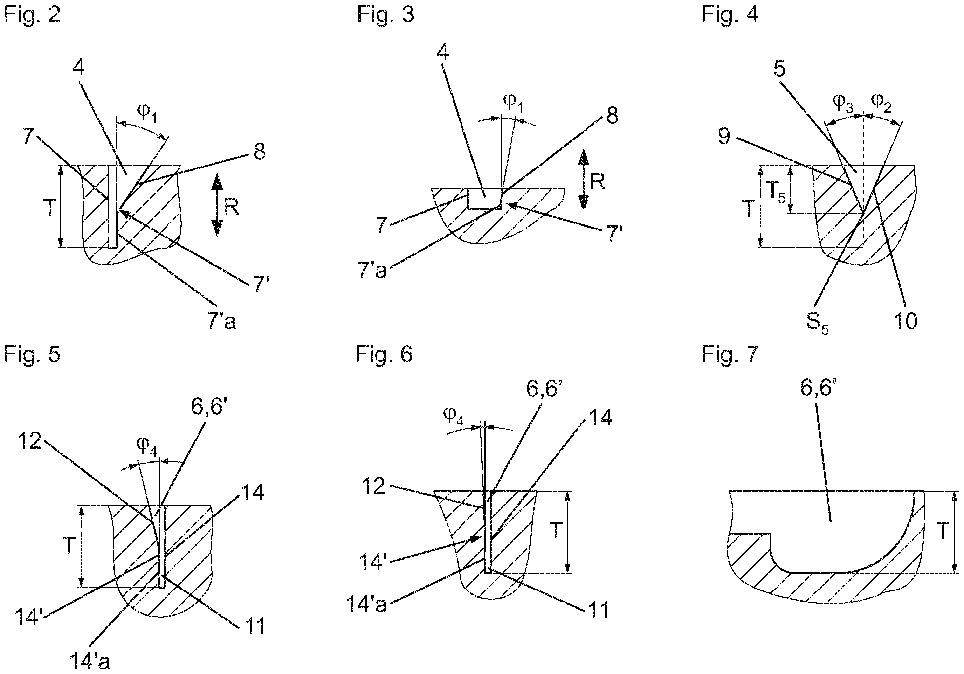

Jeder Rillenabschnitt 4, 5, 6 bzw. 6' ist auf eine spezielle Weise mit Fasen versehen, wie im Folgenden anhand der Schnittdarstellungen der Fig. 2 bis 6 näher erläutert wird. Der Rillenabschnitt 4 weist eine an das Inneneck I₁ anschließende Rillenflanke 7 auf, welche, wie die Schnittdarstellungen in Fig. 2 und Fig. 3 zeigen, in radialer Richtung R verläuft. Vom Inneneck I₁ bis zum außerhalb des bodenberührenden Bereichs befindlichen zweiten Ende wird der Rillenabschnitt 4 kontinuierlich seichter und somit wird die Rillenflanke 7 kürzer, bedingt durch die Konstruktion bzw. durch den Aufbau des Fahrzeugluftreifens in den Schulterbereichen. Die Tiefe T des Rillenabschnittes 4 im Bereich des Innenecks I₁ beträgt in der Größenordnung von 6,5 mm bis 8 mm, im laufstreifenaußenseitigen Ende beträgt die Tiefe T zwischen 20 und 30% der Tiefe T am Inneneck I₁. Die der Rillenflanke 7 gegenüberliegende Rillenflanke 7' setzt sich aus einem Flankenabschnitt 7'a und einer Schrägfläche, einer Fase 8, zusammen, welche mit sich kontinuierlich änderndem Winkel ϕ₁ gegenüber der radialen Richtung R verläuft, wobei ϕ₁ beim Inneneck I₁ 20 ° bis 65 ° und beim laufstreifenaußenseitigen Ende des Rillenabschnittes 4 zwischen 0 ° und 20 ° beträgt. Dabei erstreckt sich die Fase 8 in radialer Richtung R über einen zumindest im Wesentlichen konstanten im Bereich zwischen 45 und 80 % der Tiefe T, beispielsweise 60%. Es bleibt daher, bezogen auf die Tiefe T des Rillenabschnittes 4, die prozentuale radiale Erstreckung der Fase 8 zumindest im Wesentlichen konstant, wodurch sich die in Fig. 2 in Draufsicht zu sehende langgestreckt dreieckige Form der Fase 8 und der zwischen den Rillenflanke 7 und dem Flankenabschnitt 7'a zur Laufstreifenaußenseite größer werdende Abstand ergibt.

Der Rillenabschnitt 5 wird von zwei Schrägflächen bzw. Fasen 9, 10 gebildet bzw. begrenzt, die am Grund des Rillenabschnittes 5 eine gemeinsame Schnittkante S₅ besitzen. Die Schnittkante S₅ verläuft in einer konstanten Tiefe T₅, die der Tiefe der Fase 8 des Rillenabschnittes 4 an der Innenkante I₁ entspricht. Die Fase 10 besitzt im Eckbereich zwischen dem Rillenabschnitt 4 und dem Rillenabschnitt 5 eine gemeinsame Kante mit der Fase 8 und verläuft unter einem Winkel ϕ₂ zur radialen Richtung R, welcher an der gemeinsamen Kante dem hier vorliegenden Winkel ϕ₁ entspricht, in Richtung zum Inneneck I₂ geringer wird und hier 0 ° beträgt. Die Fase 9 verläuft beim Inneneck I₁ in radialer Richtung, zwischen dem Rillenabschnitt 4 und dem Rillenabschnitt 5 wird ihr Neigungswinkel ϕ₃ zur radialen Richtung R zum Inneneck I₂ kontinuierlich größer und beträgt beim Inneneck I₂ zwischen 20 ° und 65 °. In Draufsicht betrachtet verläuft daher die Schnittkante S₅ im Wesentlichen als Gerade vom Inneneck I₁ zum Inneneck I₂. Die Schnittdarstellung in Fig. 4 ist ein Querschnitt durch die Mitte des Rillenabschnittes 5, sodass hier die Winkel ϕ₂ und ϕ₃ der Fasen 9, 10 gegenüber der radialen Richtung R im Wesentlichen gleich groß sind.

Vom Inneneck I₂ des Rillenabschnittes 5 ausgehend verläuft eine den Rillenabschnitt 6 bzw. 6' begrenzende, in radialer Richtung orientierte Rillenflanke 14, welche einer zweiten Rillenflanke 14' gegenüberliegt, die sich aus einem Flankenabschnitt 14'a und einer Fase 12 zusammensetzt. Zwischen der Rillenflanke 14 und dem Flankenabschnitt 14'a ist eine schmale, bis zu 1 mm breite, bei dem gezeigten Ausführungsbeispiel ca. 0,6 mm breite, Basisrille 11 gebildet, die, wie es der Längsschnitt in Fig. 7 zeigt, über einen Großteil ihrer Erstreckung in der Tiefe T verläuft. Durch gerundete Übergangsbereiche wird die Tiefe der Basisrille 11 an ihren Endbereichen geringer. Die Fase 12 erstreckt sich *in* radialer Richtung in eine kontante Tiefe, die bei der gezeigten Ausführungsform 60 % der Tiefe T beträgt und zwischen 45 und 80 % der Tiefe T betragen kann. Die an der Laufstreifenoberfläche vorliegende Breite des Rillenabschnittes 6 bzw. 6' beträgt beim Inneneck I₂ zwischen 2 mm und 3,5 mm und wird gegen das freie Ende des Rillenabschnittes 6 bzw. 6' geringer und beträgt hier 0,6 mm bis 1,5 mm. Die Fase 12 besitzt beim Inneneck I₂ mit der Fase 9 des Rillenabschnittes 5 eine gemeinsame Kante. Der Winkel ϕ₄ der Fase 12 und der radialen Richtung wird zwischen der gemeinsamen Kante der Fase 12 mit der Fase 9 in Richtung freiem Ende des Rillenabschnittes 6, 6' kontinuierlich geringer und kann am freien Ende zwischen 0 ° und 20 ° betragen.

Der Rillenabschnitt 6 bzw. 6' kann alternativ analog zum Rillenabschnitt 4, jedoch mit einer konstanten Tiefe T, ausgeführt sein. Darüber hinaus ist es möglich, dass die Rillenabschnitte 6 bzw. 6' in die Umfangsrille 2 münden. Möglich ist ferner eine Ausführung, bei der eine blockartige Struktur im Profilband 1 geschaffen wird, in dem beispielsweise jede dritte oder jede vierte Querrille 3 laufstreifenaußenseitig über vergleichsweise schmale und seichte im Wesentlichen in Umfangsrichtung verlaufende weite Rillen verbunden werden.

Die erfindungsgemäße Ausführung der Schulterquerrillen mit Fasen in der beschriebenen speziellen Anordnung trägt dazu bei, Wasser möglichst wirkungsvoll in den Querrillen weiterzuleiten und aus den Querrillen in die Umfangsrille abzuleiten. Darüber hinaus stabilisieren die Fasen die Querrillenkanten in den einzelnen Querrillenabschnitten, sodass "Einrolleffekte", insbesondere beim Trockenbremsen, vermieden werden.

### Bezugszeichenliste

- 1: Profilband
- 2: Umfangsrille
- 3: Querrille
- 4: Rillenabschnitt
- 5: Rillenabschnitt
- 6, 6': Rillenabschnitt
- 7, 7': Rillenflanke
- 7'a: Flankenabschnitt
- 8: Fase
- 9: Fase
- 10: Fase
- 11: Basisrille
- 12: Fase
- 14, 14': Rillenflanke
- 14a: Flankenabschnitt
- α: Winkel
- β, β': Winkel
- γ: Winkel
- δ: Winkel
- ϕ₁: Winkel
- ϕ₂: Winkel
- ϕ₃: Winkel
- ϕ₄: Winkel
- b₄, b₄': Breite des Rillenabschnittes 4
- b₅: Breite des Rillenabschnittes 5
- I₁, I₂: Inneneck
- S₅: Schnittkante
- T: Tiefe
- T₅: Tiefe der Schnittkante S₅

## Patentansprüche

1. Fahrzeugluftreifen mit einem Laufstreifen, welcher, bei am Fahrzeug montierte Reifen betrachtet, ein bei der Außenschulter angeordnetes Profilband (1) aufweist, das durch eine in Umfangsrichtung umlaufende Umfangsnut (2) von weiteren Profilelementen getrennt ist, wobei im schulterseitigen Profilband (1) eine Vielzahl von zueinander zumindest im Wesentlichen parallel verlaufenden Querrillen (3) aus mehreren gewinkelt zueinander verlaufenden Rillenabschnitten (4, 5, 6, 6') vorgesehen ist,
**dadurch gekennzeichnet,**
**dass** sich die Querrillen (3) im Außenschulterbereich aus drei Rillenabschnitten (4, 5, 6, 6') zusammensetzen, wobei die beiden äußeren Rillenabschnitte (4, 6, 6') zumindest im Wesentlichen in axialer Richtung verlaufen und der diese verbindende mittlere Rillenabschnitt (5) jeweils unter einem stumpfen Winkel (β, β'), welcher maximal 135 ° beträgt, zu den beiden äußeren Rillenabschnitten (4, 6, 6') verläuft, wobei die äußeren Rillenabschnitte (4, 6, 6') jeweils eine zumindest im Wesentlichen in radialer Richtung verlaufende Rillenflanke (7, 14) und eine sich aus einem zumindest im Wesentlichen in radialer Richtung verlaufenden Flankenabschnitt (7'a, 14'a) und einer Fase (8, 12) zusammensetzende Rillenflanke (7, 14) aufweisen, wobei der mittlere Rillenabschnitt (5) von zwei Fasen (9, 10) gebildet ist, wobei die Fasen (8, 12) in den äußeren Rillenabschnitten (4, 5, 6, 6') bis in eine in radialer Richtung ermittelte Tiefe reichen, die ein bestimmter für diese Fasen (8, 12) gleicher prozentualer Wert der jeweiligen oder der größten Tiefe (T) dieser Rillenabschnitte (4, 5, 6, 6') ist, und wobei die Fasen (9, 10), welche den mittleren Rillenabschnitt (5) bilden, bis in eine Tiefe reichen, welche der Tiefe der Fasen (8, 12) der äußeren Rillenabschnitte (4, 6, 6') an deren Eckbereichen zum mittleren Rillenabschnitt (5) zumindest im Wesentlichen entspricht.

2. Fahrzeugluftreifen nach Anspruch 1, **dadurch gekennzeichnet, dass** der prozentuale Wert zwischen 45 % und 80 %, insbesondere etwa 60 %, beträgt.

3. Fahrzeugluftreifen nach einem der Ansprüche 1 oder 2, **dadurch gekennzeichnet, dass** die Fase (8) des einen äußeren Rillenabschnittes (4) mit der einen Fase (10) des mittleren Rillenabschnittes (5) und die Fase (12) des anderen äußeren Rillenabschnittes (6, 6') mit der anderen Fase (9) des mittleren Rillenabschnittes (5) eine gemeinsame Kante bildet.

4. Fahrzeugluftreifen nach einem der Ansprüche 1 bis 3, **dadurch gekennzeichnet, dass** die Fasen (8, 12) in den äußeren Rillenabschnitten (4, 6, 6') an den Eckbereichen zum mittleren Rillenabschnitt (5) ihren größten Winkel (ϕ₁, ϕ₄) mit der radialen Richtung einschließen, wobei der Winkel (ϕ₁, ϕ₄) über die Erstreckung der Rillenabschnitte (4, 6, 6') kontinuierlich kleiner wird.

5. Fahrzeugluftreifen nach einem der Ansprüche 1 bis 4, **dadurch gekennzeichnet, dass** die Winkel (ϕ₁, ϕ₄) der Fasen (8, 12) in den äußeren Rillenabschnitten (4, 6, 6') beim mittleren Rillenabschnitt (5) zwischen 20 ° und 65 °, an den freien Enden der Rillenabschnitte (4, 6, 6') zwischen 0 ° und 20 ° betragen.

6. Fahrzeugluftreifen nach einem der Ansprüche 1 bis 5, **dadurch gekennzeichnet, dass** im mittleren Rillenabschnitt (5) die eine Fase (9) am Inneneck (I₁) zum laufstreifenaußenseitig anschließenden Rillenabschnitt (4) ihren größten Winkel (ϕ₃) mit der radialen Richtung einschließt, wobei die andere Fase (10) am Inneneck (I₂) zum laufstreifeninnenseitig anschließenden Rillenabschnitt (6, 6') ihren größten Winkel (ϕ₂) mit der radialen Richtung einschließt.

## Claims

1. Pneumatic vehicle tyre with a tread which, as seen when the tyre is fitted on the vehicle, has a profile band (1) which is arranged at the outer shoulder and is separated from other profile elements by a circumferential groove (2) running around in the circumferential direction, wherein a multiplicity of transverse grooves (3), extending at least substantially parallel to one another and comprising multiple groove portions (4, 5, 6, 6') that extend at an angle in relation to one another is provided in the shoulder-side profile band (1), **characterized**
**in that** the transverse grooves (3) in the outer shoulder region are made up of three groove portions (4, 5, 6, 6'), wherein the two outer groove portions (4, 6, 6') extend at least substantially in the axial direction and the middle groove portion (5), connecting said outer groove portions, extends in relation to the two outer groove portions (4, 6, 6') in each case at an obtuse angle (β, β'), which is a maximum of 135°, wherein the outer groove portions (4, 6, 6') have in each case a groove flank (7, 14) that extends at least substantially in the radial direction and a groove flank (7, 14) which is made up of a flank portion (7'a, 14'a) that extends at least substantially in the radial direction and a bevel (8, 12), wherein the middle groove portion (5) is formed by two bevels (9, 10), wherein the bevels (8, 12) in the outer groove portions (4, 5, 6, 6') reach to a depth, determined in the radial direction, which is a specific percentage value, equal for these bevels (8, 12), of the respective or the greatest depth (T) of these groove portions (4, 5, 6, 6'), and wherein the bevels (9, 10) that form the middle groove portion (5) reach to a depth which at least substantially corresponds to the depth of the bevels (8, 12) of the outer groove portions (4, 6, 6') at the corner regions thereof to the middle groove portion (5).

2. Pneumatic vehicle tyre according to Claim 1, **characterized in that** the percentage value is between 45% and 80%, in particular approximately 60%.

3. Pneumatic vehicle tyre according to either of Claims 1 and 2, **characterized in that** the bevel (8) of the one outer groove portion (4) forms a common edge with the one bevel (10) of the middle groove portion (5) and the bevel (12) of the other outer groove portion (6, 6') forms a common edge with the other bevel (9) of the middle groove portion (5).

4. Pneumatic vehicle tyre according to one of Claims 1 to 3, **characterized in that** the bevels (8, 12) in the outer groove portions (4, 6, 6') form their greatest angle (ϕ₁, ϕ₄) with the radial direction at the corner regions to the middle groove portion (5), wherein the angle (ϕ₁, ϕ₄) becomes continuously smaller over the extent of the groove portions (4, 6, 6').

5. Pneumatic vehicle tyre according to one of Claims 1 to 4, **characterized in that** the angles (ϕ₁, ϕ₄) of the bevels (8, 12) in the outer groove portions (4, 6, 6') are in the case of the middle groove portion (5) between 20° and 65°, at the free ends of the groove portions (4, 6, 6') between 0° and 20°.

6. Pneumatic vehicle tyre according to one of Claims 1 to 5, **characterized in that**, in the middle groove portion (5), the one bevel (9) forms its greatest angle (ϕ₃) with the radial direction at the inner corner (I₁) to the groove portion (4) adjoining on the outer side of the tread, wherein the other bevel (10) forms its greatest angle (ϕ₂) with the radial direction at the inner corner (I₂) to the groove portion (6, 6') adjoining on the inner side of the tread.

## Revendications

1. Pneumatique de véhicule avec une bande de roulement qui, lorsque l'on considère le pneu monté sur le véhicule, présente une bande profilée (1) disposée près de l'épaulement extérieur, qui est séparée d'autres éléments profilés par une rainure périphérique (2) s'étendant dans la direction périphérique, dans lequel il est prévu dans la bande profilée côté épaulement (1) une multiplicité de rainures transversales (3) s'étendant au moins essentiellement parallèlement les unes aux autres, composées de plusieurs parties de rainure (4, 5, 6, 6') s'étendant angulairement l'une par rapport à l'autre,
**caractérisé en ce que** les rainures transversales (3) se composent de trois parties de rainure (4, 5, 6, 6') dans la région de l'épaulement extérieur, dans lequel les deux parties de rainure extérieures (4, 6, 6') s'étendent au moins essentiellement en direction axiale et la partie de rainure médiane (5) reliant celles-ci s'étend respectivement sous un angle obtus (β, β'), qui vaut au maximum 135°, par rapport aux deux parties de rainure extérieures (4, 6, 6'), dans lequel les parties de rainure extérieures (4, 6, 6') présentent respectivement un flanc de rainure (7, 14) s'étendant au moins essentiellement en direction radiale et un flanc de rainure (7, 14) se composant d'une partie de flanc (7'a, 14'a) s'étendant au moins essentiellement en direction radiale et d'un chanfrein (8, 12), dans lequel la partie de rainure médiane (5) est formée par deux chanfreins (9, 10), dans lequel les chanfreins (8, 12) arrivent dans les parties de rainure extérieures (4, 5, 6, 6') jusqu'à une profondeur déterminée en direction radiale, qui est une valeur en pourcentage déterminée égale pour ces chanfreins (8, 12) de la profondeur respective ou de la plus grande profondeur (T) de ces parties de rainure (4, 5, 6, 6'), et dans lequel les chanfreins (9, 10), qui forment la partie de rainure médiane (5), arrivent jusqu'à une profondeur, qui correspond au moins essentiellement à la profondeur des chanfreins (8, 12) des parties de rainure extérieures (4, 6, 6') dans leurs régions d'angle avec la partie de rainure médiane (5).

2. Pneumatique de véhicule selon la revendication 1, **caractérisé en ce que** la valeur en pourcentage vaut entre 45 % et 80 %, en particulier environ 60 %.

3. Pneumatique de véhicule selon une des revendications 1 ou 2, **caractérisé en ce que** le chanfrein (8) d'une partie de rainure extérieure (4) forme une arête commune avec un chanfrein (10) de la partie de rainure médiane (5) et le chanfrein (12) de l'autre partie de rainure extérieure (6, 6') forme une arête commune avec l'autre chanfrein (9) de la partie de rainure médiane (5).

4. Pneumatique de véhicule selon l'une quelconque des revendications 1 à 3, **caractérisé en ce que** les chanfreins (8, 12) dans les parties de rainure extérieures (4, 6, 6') forment dans les régions d'angle avec la partie de rainure médiane (5) leur plus grand angle (ϕ₁, ϕ₄) avec la direction radiale, dans lequel l'angle (ϕ₁, ϕ₄) diminue de façon continue sur l'extension des parties de rainure (4, 6, 6').

5. Pneumatique de véhicule selon l'une quelconque des revendications 1 à 4, **caractérisé en ce que** les angles (ϕ₁, ϕ₄) des chanfreins (8, 12) dans les parties de rainure extérieures (4, 6, 6') valent à la partie de rainure médiane (5) entre 20° et 65°, aux extrémités libres des parties de rainure (4, 6, 6') entre 0° et 20°.

6. Pneumatique de véhicule selon l'une quelconque des revendications 1 à 5, **caractérisé en ce que**, dans la partie de rainure médiane (5), un chanfrein (9) forme à l'angle intérieur (I₁) avec la partie de rainure (4) se raccordant côté bande de roulement son plus grand angle (ϕ₃) avec la direction radiale, dans lequel l'autre chanfrein (10) forme à l'angle intérieur (I₂) avec la partie de rainure (6, 6') se raccordant côté bande de roulement son plus grand angle (ϕ₂) avec la direction radiale.
